# EUROPEAN PATENT SPECIFICATION

(11) **EP 2 927 196 B1**
(45) Date of publication and mention of the grant of the patent: **22.04.2020**
(21) Application number: 14382131.2
(22) Date of filing: 04.04.2014
(51) Int. Cl.: C02F 3/10, C02F 3/08, C02F 3/34

(54) **METHOD FOR TREATING WASTE WATER IN A FLUIDISED BED BIOREACTOR**
VERFAHREN ZUR BEHANDLUNG VON ABWASSER IN EINEM WIRBELSCHICHT-BIOREAKTOR
PROCÉDÉ DE TRAITEMENT DES EAUX USÉES DANS UN BIORÉACTEUR À LIT FLUIDISÉ

(43) Date of publication of application: 07.10.2015
(73) Proprietor: aqualia, Gestión Integral del Agua, S.A., 28016 Madrid (ES); Universidad de Alcalà, 28801 Alcala de Henares - Madrid (ES)
(72) Inventor: Esteve Nuñez, Abraham, 28250 Madrid (ES); Berna Galiano, Antonio, 03201 Elche - Alicante (ES); Tejedor Sanz, Sara, 28005 Madrid (ES); Leton Garcia, Pedro, 28804 Alcala de Henares - Madrid (ES); Rodrigo Jeguigo, José, 16630 Mota del Cuervo - Cuenca (ES)
(74) Representative: Carvajal y Urquijo, Isabel

(56) References cited:
- WO-A2-2010/002503
- GB-A- 2 449 453
- KORNEEL RABAEY ET AL: "Tubular Microbial Fuel Cells for Efficient Electricity Generation", ENVIRONMENTAL SCIENCE & TECHNO, AMERICAN CHEMICAL SOCIETY, US, vol. 39, no. 20, 1 January 2005 (2005-01-01), pages 8077-8082, XP008142174, ISSN: 0013-936X, DOI: 10.1021/ES050986I [retrieved on 2005-09-20]

## Description

### FIELD OF THE INVENTION

The present invention is related to Fluidised Bed Bioreactors (FBR). Particularly, the present invention is related to a method for treating waste water in a fluidised bed bioreactor, wherein the organic matter present in waste water is oxidised in the presence of electrically conductive particles and bacteria from the genus *Geobacter.*

### BACKGROUND OF THE INVENTION

Microbial Electrochemical Technologies (METs) represent a number of technologies where bacteria interact with electrically conductive material. For instance, Microbial Fuel Cell (MFC) converts chemical energy into electrical energy by using microorganisms. In this kind of electrochemical bioreactor, the oxidation of organic matter is carried out by microorganisms that efficiently transfer electrons to an electrode (anode). The circuit is closed by the presence of a cathode so electricity can be harvested. Other type of METs are the Microbial Electrolysis Cells (MEC), where electrodes are artificially polarised by means of a potentiostat or a power source so microbial can interact with the conductive surface to perform either oxidation or reduction of substrates.

Biological waste water treatment is based on the biological oxidation of the organic matter present in the waste water. This oxidation needs coupling to a reduction reaction (e.g. oxygen reduction), usually limiting the process due to the high cost of artificially supply of oxygen to the system.

To avoid this, there are some waste water treatments carried out under anaerobic conditions. These systems lead to the accumulation of short-chain organic acids as acetate (volatile fatty acids, VFAs). Among the different devices for waste water treatment available in the market, the so-called Fluidised Bed Bioreactors (FBR) have raised recent interest. They have the advantage of combining biofilm-biomass and high surface of contact by using a bed of fluidised particles that act as a sole physical support of an active biofilm of bacteria that clean up the waste water.

FBR are usually used for promoting the growth of an active biofilm of micro-organisms associated to the bed of inert particles. FBR have been disclosed in the state of the art as a sole physical support for bacteria growth without any role as substrate.

There are also applications of fluidised bed with electrochemical nature in the metallurgic field for promoting metal redox reactions. Nevertheless, such applications does not include any biological element/application on waste water treatment.

One example of the state of the art is the document GB2449453A. This document discloses a microbial fuel cell comprising an anode, a cathode, an electrolytic fluid, a fluid chamber, a substrate, bacteria acting as a catalyst and a plurality of capacitive particles for transferring to the anode electrons generated in an electrochemical reaction of the substrate at the catalyst. Capacitive particles are mobile particles that act as capacitors to store electrical charge.

Other relevant example is the document WO2010002503A2. This document discloses a method for removing a target compound from a liquid arranging two active surfaces within a flow of the liquid and developing a population of microorganisms concentrated on the active surfaces. A variety of microorganism can be utilized to inoculate the surfaces.

The prior art teaches that electroactive bacteria showed a strong requirement: colonize an electrically conductive surface in order to directly transfer electrons to it.

### DESCRIPTION OF THE INVENTION

Biological oxidation of organic matter present in the waste water classically needs coupling e.g. to oxygen reduction, requiring an artificial supply of oxygen.

The present invention overcomes this problem by a method for treating waste water in a fluidised electrically-conductive bed bioreactor.

The present invention provides a method for treating waste water in a fluidised bed bioreactor, which comprises the following steps:
(a) adding electrically conductive particles of vitreous carbon with a size equal or lower than 1.5 mm to the solution present in the bioreactor,
(b) adding a suspension of bacteria from the genus *Geobacter* in said bioreactor;
(c) in the presence of said particles and said bacteria, oxidising the organic matter present in waste water, wherein electrons generated during oxidation of the organic matter are transferred to electrically conductive fluidized particles due to the extracellular electron transfer capacity, and
(d) the electrons from the electrochemical fluidized bed are transferred to another electrode called counter electrode, where they are consumed in the reduction of electroatractive species present in the solution in the bioreactor.

*Geobacter* bacteria store and transfer electrons to electrodes thorough cytochrome C proteins located in the extracellular membrane of the bacteria (Esteve-Núñez A. et al. Fluorescent properties of c-type cytochromes reveal their potential role as an extracytoplasmic electron sink in Geobacter sulfurreducens. Environ Microbiol. 2008 Feb;10(2): 497-505; Schrott et al., Electrochemical insight into the mechanism of electron transport in biofilms of Geobacter sulfurreducens. Electrochimica Acta 2011, 56, 10791-10795); said cytochrome C proteins are present in all disclosed species of Geobacter.

Another embodiment is the method of the invention, wherein said bacteria is *Geobacter sulfurreducens.*

Fluidised bed bioreactors of the state of the art use a bed of fluidised particles that act as a sole physical support of an active biofilm of bacteria that clean up waste water.

The present invention also uses a bed of fluidised particles that act as a physical support.

However, the present invention also uses a material with electrically conductive characteristics that enhances the biodegradation of organic matter. This is possible by using bacteria from the *Geobacter* genus able to store electrons from the oxidation of organic matter and efficiently transfer them to electrically conductive fluidised bed due to their extracellular electron transfer capacity.

Basically, the bacteria attached to the particles or even suspended in the solution oxidise the organic matter and transfer all these electrons into the electrochemical fluidised bed so they can be circulated to another electrode called counter electrode where they are consumed in the reduction of electroactive species present in solution. For instance, oxygen and water could accept electrons to respectively generate water or hydrogen as end-product.

The main advantages of the present invention are:
- Enhancement of biodegradation rates of organic matter by combining the availability of an unlimited electron acceptor (fluidised bed) and the exocellular electron transfer ability of *Geobacter.*
- The biodegradation rate is not limited to those cells just forming a biofilm as typically exist in microbial fuel cell applications. Instead, all the cells in solution can participate in the process.
- Minimising the biomass production due to the lower growth yield of electrogenic bacteria (Geobacter).
- *In situ* monitoring of the biodegradation rate on real time through electric current measurement.
- No production of greenhouse gas (no or low methane production).

### BRIEF DESCRIPTION OF THE FIGURES

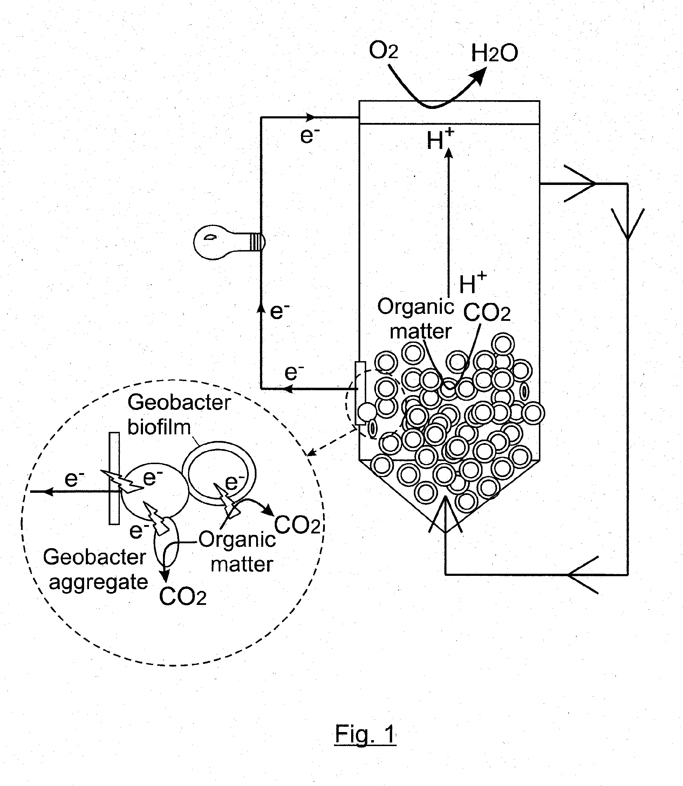

Figure 1. Scheme of Fluidised Bed Bioreactor comprising electrically conductive particles and *Geobacter* cells, according to the method of the invention.
Figure 2. Acetate oxidation according to the method of the invention.

### EXAMPLE

### Oxidation of organic matter

*Geobacter sulfurreducens* cells were pre-cultured in a chemostat using a culture medium containing acetate 10 mM and fumarate 10 mM. 1500 mL of a chemostat culture (OD₆₀₀ = 0.125) were harvested, centrifuged and then resuspended in bicarbonate buffer to get a high-density suspension of charged cells. Said cells were then inoculated into a fluidised bed bioreactor.

The bioreactor contained a solution of acetate 5 mM, bicarbonate buffer 100 mM and fluidised bed particles of granulated graphite with a particle size from 0.15 mm to 0.25 mm. Granulated graphite is an electroactive material.

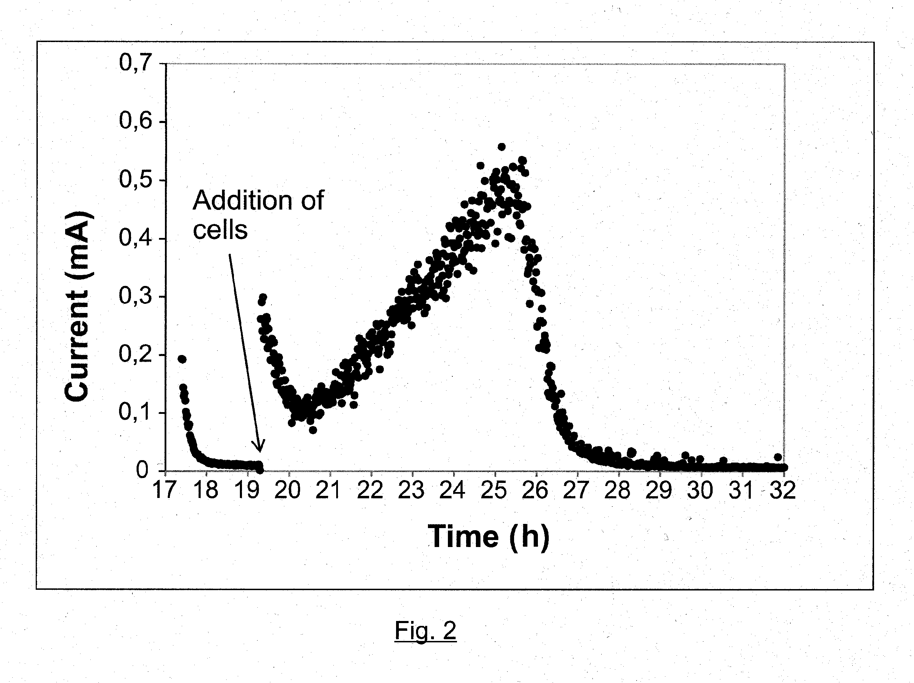

Just after inoculation of the cells, a sharp discharge of current into the fluidised electrochemical bed was detected, as can be seen in Figure 2. Then, a constant increase of current due to microbial acetate oxidation was monitored for more than six hours before cells reach stationary phase and reduce their metabolism together with the current production.

## Claims

1. Method for treating waste water in a fluidised bed bioreactor, **characterised in that** it comprises the following steps:
(a) adding electrically conductive particles of vitreous carbon with a size equal or lower than 1.5 mm to the solution present in the bioreactor,
(b) adding a suspension of bacteria from the genus *Geobacter* in said bioreactor;
(c) in the presence of said particles and said bacteria oxidising the organic matter present in waste water, wherein electrons generated during oxidation of the organic matter are transferred to electrically conductive fluidized particles due to the extracellular electron transfer capacity, and
(d) the electrons from the electrochemical fluidized bed are transferred to another electrode called counter electrode, where they are consumed in the reduction of electroatractive species present in the solution in the bioreactor.

2. Method according to claim 1, **characterised in that** said bacteria is *Geobacter sulfurreducens.*

## Patentansprüche

1. Verfahren zur Behandlung von Abwasser in einem Wirbelschicht-Bioreaktor, **dadurch gekennzeichnet, dass** es die folgenden Schritte umfasst:
(a) Zugabe von elektrisch leitenden Teilchen aus Glaskohlenstoff von einer Größe gleich oder kleiner als 1.5 mm zu der im Bioreaktor befindlichen Lösung,
(b) Zugabe einer Suspension von Bakterien der Gattung *Geobacter* in den genannten Bioreaktor;
(c) unter Vorliegen der genannten Teilchen und der genannten Bakterien Oxidieren der im Abwasser vorhandenen organischen Substanz, wobei die während der Oxidation der organischen Substanz erzeugten Elektronen aufgrund der extrazellulären Elektronenübertragungskapazität auf elektrisch leitende fluidisierte Teilchen übertragen werden, und
(d) Übertragen der Elektronen aus der elektrochemischen Wirbelschicht auf eine andere, als Gegenelektrode bezeichnete Elektrode, wo sie beim Abbau der in der Lösung im Bioreaktor vorhandenen elektronenanziehenden Spezies verbraucht werden.

2. Verfahren nach Anspruch 1, **dadurch gekennzeichnet, dass** das genannte Bakterium *Geobacter Sulfurreducens* ist.

## Revendications

1. Procédé de traitement des eaux usées dans un bioréacteur à lit fluidisé, **caractérisé en ce qu'**il comprend les étapes suivantes :
(a) ajouter à la solution présente dans le bioréacteur des particules électriquement conductrices de carbone vitreux d'une taille égale ou inférieure à 1,5 mm,
(b) ajouter une suspension de bactéries du genre *Geobacter* dans ledit bioréacteur ;
(c) en présence desdites particules et desdites bactéries, oxyder la matière organique présente dans les eaux usées, dans lequel les électrons générés pendant l'oxydation de la matière organique sont transférés à des particules fluidisées électriquement conductrices en raison de la capacité de transfert extracellulaire des électrons, et
(d) les électrons du lit fluidisé électrochimique sont transférés vers une autre électrode appelée contre-électrode, où ils sont consommés dans la réduction des espèces électroattractives présentes dans la solution du bioréacteur.

2. Procédé selon la revendication 1, **caractérisé en ce que** lesdites bactéries sont *Geobacter Sulfurreducens.*
